(19) Europäisches Patentamt / European Patent Office / Office européen des brevets

(11) **EP 2 878 064 B1**

(12) **FASCICULE DE BREVET EUROPEEN**

(45) Date de publication et mention de la délivrance du brevet:
**11.11.2020 Bulletin 2020/46**

(21) Numéro de dépôt: **13756547.9**

(22) Date de dépôt: **23.07.2013**

(51) Int Cl.:
*H02K 1/27* *(2006.01)*     *H02K 3/26* *(2006.01)*
*H02K 21/24* *(2006.01)*    *H02K 3/28* *(2006.01)*
*B60L 50/51* *(2019.01)*

(86) Numéro de dépôt international:
**PCT/FR2013/000202**

(87) Numéro de publication internationale:
**WO 2014/016476 (30.01.2014 Gazette 2014/05)**

(54) **MOTEUR ÉLECTRIQUE À FLUX AXIAL**

**AXIALFLUSS-ELEKTROMOTOR**

**AXIAL-FLOW ELECTRIC MOTOR**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2012 FR 1202121**

(43) Date de publication de la demande:
**03.06.2015 Bulletin 2015/23**

(73) Titulaire: **ELECTRICMOOD**
**93100 Montreuil (FR)**

(72) Inventeur: **LIBAULT, David**
**75003 Paris (FR)**

(74) Mandataire: **A.P.I. Conseil**
**Immeuble Newton**
**4, rue Jules Ferry**
**64000 Pau (FR)**

(56) Documents cités:
**WO-A2-2004/073365     FR-A- 1 520 439**
**US-A- 3 450 919        US-A1- 2012 169 154**

## Description

La présente invention concerne un moteur électrique à flux axial.

Un moteur électrique est un dispositif qui transforme une puissance électrique en puissance mécanique. La description sera limitée aux machines tournantes. L'homme du métier pourra aisément transposer l'invention aux machines linéaires.

Un moteur électrique est composé de deux parties : une partie tournante appelée rotor et une partie fixe appelée stator. C'est le couple développé entre le stator et le rotor qui permet d'entrainer la rotation du rotor et ainsi fournir une puissance mécanique au dispositif entraîné.

Les moteurs électriques trouvent de nombreuses applications dans l'industrie ainsi que dans les produits grand public comme un lave-linge ou une montre à quartz. Une de ces applications est la propulsion des véhicules électriques.

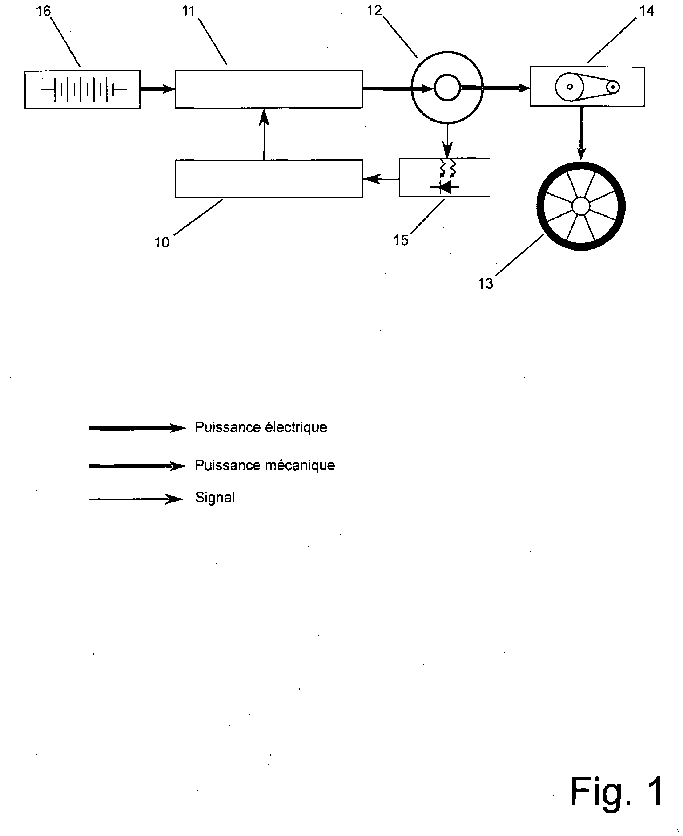

La figure 1 montre un schéma de véhicule électrique dans lequel l'énergie électrique est fournie par une batterie 16 de type lithium/ion/polymère par exemple. Une électronique 10 dite de contrôle est connectée à une électronique de puissance 11 connectée, elle-même, à un moteur électrique 12. Le moteur électrique 12 transmet sa puissance mécanique à une roue motrice 13 par l'intermédiaire d'une transmission 14. Cette transmission peut être effectuée à l'aide d'un arbre moteur, d'une chaîne ou d'une courroie de transmission. Une boîte de vitesses peut être intercalée entre le moteur et la transmission.

Dans le cas d'un moteur sans balais, l'électronique de contrôle 10 adapte la phase du courant injecté dans le moteur 12 pour qu'elle soit verrouillée sur la phase de rotation du champ magnétique tournant créé par le rotor. Un capteur de position optique 15, ou à effet Hall par exemple, connecté à l'électronique de contrôle 10 peut être utilisé pour mesurer l'angle de rotation du rotor par rapport au stator, cette mesure étant intégrée dans la boucle de contrôle.

L'homme du métier reconnaîtra qu'il existe de nombreuses combinaisons possibles d'une ou plusieurs batteries, d'un ou plusieurs moteurs électriques avec une ou plusieurs transmissions et une ou plusieurs roues motrices permettant de réaliser un tel dispositif.

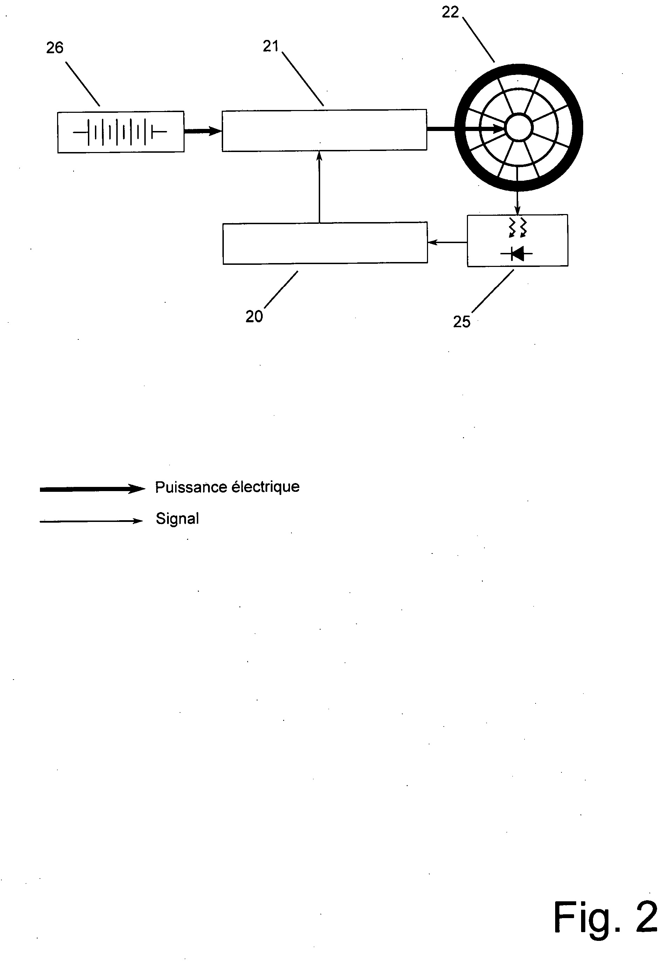

Dans certains cas on peut se passer de la transmission en intégrant le moteur électrique 22 dans la roue motrice comme illustré sur la figure 2. Dans ce cas, la roue est solidaire du rotor du moteur. Ce dispositif permet d'éliminer les pertes mécaniques ainsi le coût de remplacement des pièces d'usure d'un système de transmission.

L'histoire des moteurs électriques révèle que les premières machines étaient à flux axial (Brevet US 405858 N. Tesla, 1889). Ce type de moteur a ensuite été peu exploité au profit du moteur à flux radial jusqu'au développement récent d'aimants à haute énergie comme les aimants de type NdFeB dits « à terres rares » (première publication en 1983) qui a ravivé l'intérêt pour ce type de machine.

La caractéristique du moteur à flux axial est que la direction du champ magnétique est parallèle à l'axe de rotation du moteur. Les conducteurs parcourus par le courant électrique sont, eux, disposés radialement.

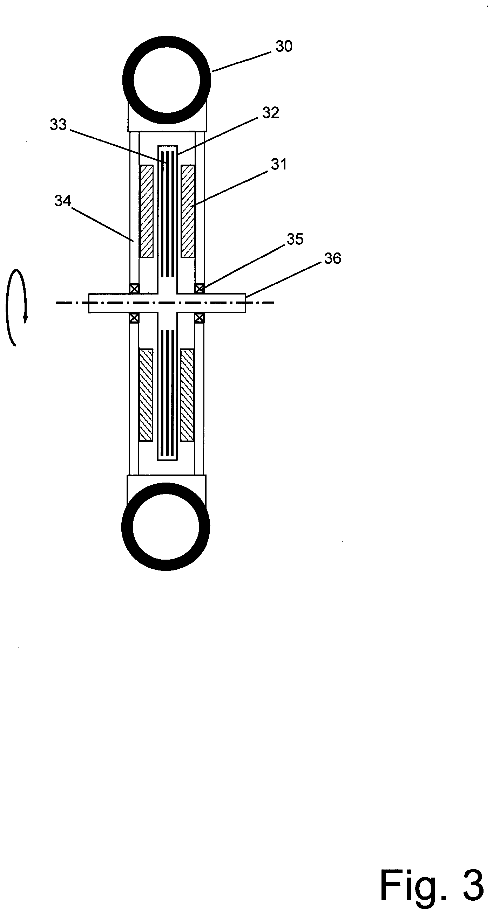

La figure 3 représente une coupe schématique d'un moteur 30 à flux axial et aimants permanents (AFPM pour Axial Flux Permanent Magnet) dans une configuration intégrée à la roue. Le rotor intègre des aimants permanents 31 dont la magnétisation et la disposition permettent de créer un champ magnétique alternatif dans la direction axiale. Le sens de la magnétisation est alterné entre deux pôles successifs. Le nombre de fois où le sens de la magnétisation est inversé au cours d'une rotation complète du rotor est appelé nombre de pôles. Ce nombre étant pair, on dit que le moteur possède 2p pôles, p étant un nombre entier.

Le stator est constitué d'enroulements 32 permettant aux conducteurs 33 de traverser l'entrefer formé par le rotor, et ainsi de générer un couple lorsqu'ils sont traversés par un courant électrique. Le sens dans lequel le courant électrique traverse le conducteur dans l'entrefer par rapport à l'orientation du champ magnétique créé par les aimants du rotor 31 est essentiel pour que les couples générés par chaque segment de conducteur s'additionnent.

Plusieurs phases réparties régulièrement angulairement, activées alternativement permettent d'obtenir un couple constant quel que soit l'angle de position du rotor par rapport au stator. On désignera par m le nombre de phases du stator. Dans la plupart des cas, m=3. Dans le cas d'un stator à trois phases, celles-ci peuvent être assemblées en étoile ou en delta, la configuration en étoile étant la plus utilisée.

Pour réaliser le stator d'un moteur électrique à flux axial et aimants permanents, on peut avantageusement utiliser la technologie des circuits imprimés tel qu'illustré dans le document WO2004/073365.

Un circuit imprimé est constitué d'un empilement de couches conductrices et isolantes alternativement. Le matériau utilisé comme substrat isolant est généralement un composite de résine époxyde renforcé de fibre de verre. Ce substrat fourni la résistance mécanique nécessaire pour supporter les contraintes générées par le couple produit. Le conducteur utilisé est généralement un métal comme le cuivre ou l'aluminium.

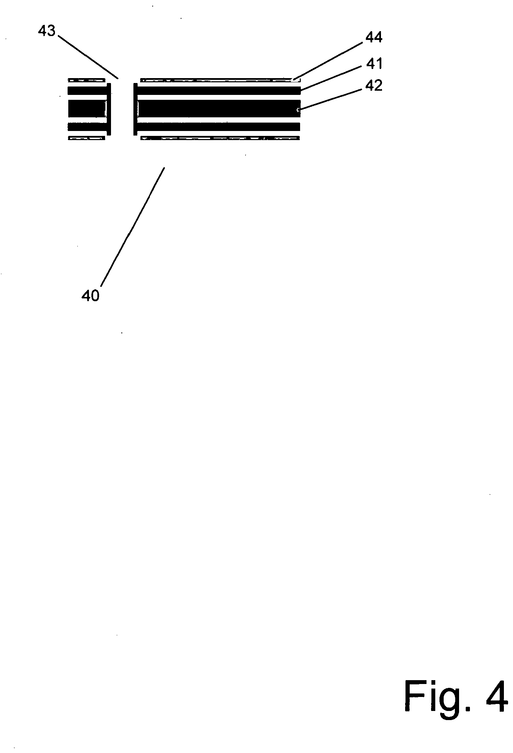

La figure 4 montre une coupe schématique d'un circuit imprimé 40 deux couches.

Les couches conductrices 41 sur le substrat isolant 42 sont gravées par photogravure chimique pour reproduire les motifs souhaités. Des trous métallisés 43 permettent d'effectuer des contacts électriques entre des motifs de deux ou plusieurs couches conductrices d'un même circuit imprimé. Un vernis isolant 44 est appliqué en fin de processus de fabrication.

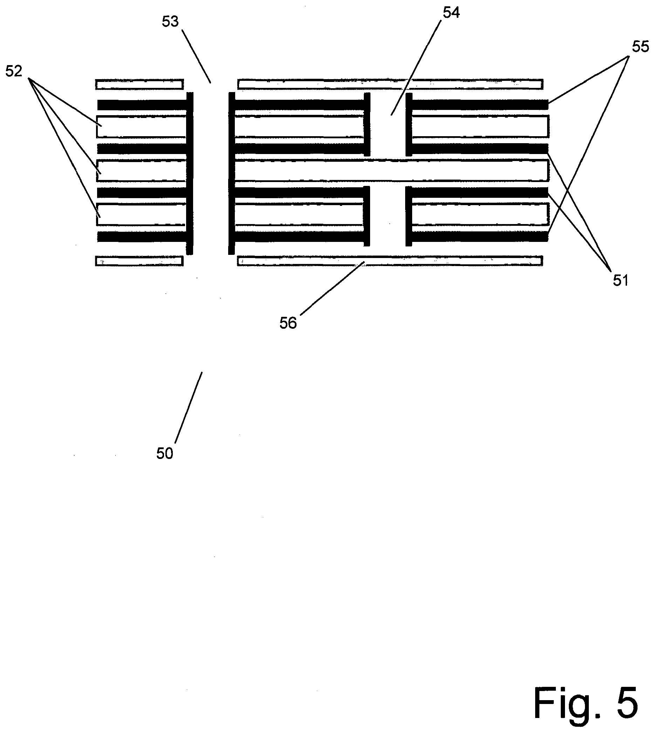

La figure 5 montre un exemple de circuit imprimé 50 quatre couches. Dans le cas de circuits imprimés multi-couches, en plus des couches conductrices externes 55, des couches conductrices internes 51 sont ajoutées en les alternant avec des couches de substrat isolant 52. Différentes configuration d'assemblage sont possibles. Dans la configuration représentée, les trous métallisés peuvent être traversants 53, c'est-à-dire mettre en contact potentiellement toutes les couches traversées, soit borgnes 54 c'est-à-dire que les trous ne traversent qu'une couche de substrat 52, et seules deux couches conductrices adjacentes peuvent être connectées en ce point. L'intérêt des trous métallisés borgnes est d'obtenir plusieurs points de connexion isolés entre eux aux mêmes coordonnées.

L'industrie du circuit imprimé produit couramment des circuits de 2 à 12 couches. L'épaisseur des couches de conducteur utilisées varient couramment de 35 micromètres à 140 micromètres. La technologie de photogravure permet d'obtenir des espacements entre les pistes très faibles, de l'ordre de la centaine de microns.

La majeure partie des circuits imprimés produits par l'industrie de l'électronique sont utilisés pour l'assemblage de composants électroniques discrets (comme des résistances, des condensateurs, des inductances, des transistors etc...) et intégrés (comme des processeurs, des mémoires, des circuits de gestion de puissance etc...) montés en surface, ou en traversant.

Pour cette application, l'épaisseur totale du circuit nécessaire est faible, de l'ordre de 3 millimètres au maximum. Par conséquent, la plupart des équipements de fabrication de circuits imprimés sont conçus pour la fabrication de circuits d'une épaisseur inférieure à 3 millimètres.

Toutefois, dans le cas d'un stator de moteur électrique à flux axial, cette limite d'épaisseur peut limiter la performance du moteur. En effet, pour une intensité de courant électrique donnée, plus l'épaisseur du stator est faible, plus la densité de courant le traversant est importante. Lorsque la densité de courant électrique est trop importante, l'augmentation de la température du circuit par effet Joule peut détruire celui-ci. Si une épaisseur du stator supérieure à 3 millimètres est nécessaire, les équipements de fabrication de circuits imprimés devraient être adaptés, ce qui augmenterait significativement, les coûts d'outillage.

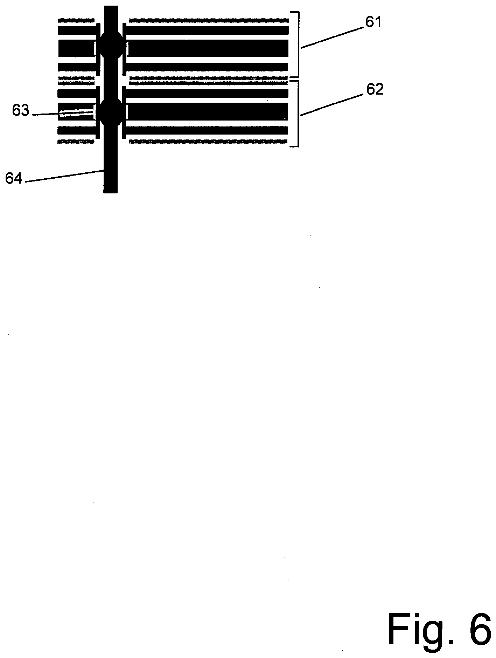

Dans ce cas, on peut avoir recours à l'assemblage de circuits imprimés de faible épaisseur pour obtenir un stator de plus grande épaisseur comme illustré sur la figure 6. La difficulté de l'assemblage réside dans le fait que les conducteurs ont leur point d'accès au centre du circuit. Il n'est donc pas possible de relier les circuits 61, 62 les uns aux autres autrement que par la mise en regard de trous métallisés 63 de circuits adjacents dans l'empilement. Le contact entre les circuits est alors assuré par un fil conducteur 64 placé dans les trous métallisés en regard des deux circuits comme représenté dans la figure 6. Le contact entre le fil conducteur 64 et le trou métallisé 63 peut être effectué par soudure ou avec un système de serrage par exemple.

La présente invention vise à pallier au moins un de ces inconvénients.

L'objet de l'invention est décrit dans la revendication 1. Modes des réalisations préférés sont décrit dans les revendications dépendantes.

A cet effet un premier aspect de l'invention concerne un moteur électrique à flux axial à 2p pôles magnétiques comportant : un rotor ; et un stator à m phases, le stator étant composé d'au moins une paire de couches de conducteurs sur lesquelles des pistes conductrices constituant les phases du stator sont agencées en demi-phases.

Selon un mode de réalisation chaque demi-phase comprend deux ensembles de pistes conductrices; chaque ensemble de pistes conductrices étant disposé dans une configuration radiale entre un bord intérieur du stator et un bord extérieur du stator, de façon que le courant électrique d'un ensemble de pistes conductrices d'une demi-phase court du bord intérieur du stator vers le bord extérieur du stator et le courant électrique de l'autre ensemble de pistes conductrices de ladite demi-phase court du bord extérieur du stator vers le bord intérieur du stator.

Chaque ensemble de pistes conductrices peut comprendre une ou plusieurs pistes conductrices.

Selon un mode de réalisation un des ensembles des pistes conductrices d'une demi-phase est imprimé sur une couche d'une paire de couches de conducteurs et l'autre ensemble de pistes conductrices de ladite demi-phase est imprimé sur l'autre couche de ladite paire de couches de conducteurs.

Selon un mode de réalisation les deux ensembles de pistes conductrices d'une demi-phase sont interconnectés par des connexions disposées à proximité des bords intérieur et extérieur du stator.

Selon un mode de réalisation les deux demi-phases d'une même phase et d'une même paire de couches de conducteurs du stator sont décalées l'une par rapport à l'autre par une rotation d'angle $\dfrac{\pi}{p}$ radians

Selon un mode de réalisation deux points d'accès du courant électrique aux pistes conductrices d'une demi-phase d'une paire de couches de conducteurs du stator, sont décalés l'un par rapport à l'autre par une rotation d'angle $\dfrac{2\pi}{p}$ radians, chaque point d'accès étant associé à une extrémité de ladite demi-phase.

Selon un mode de réalisation les points d'accès du courant électrique d'une demi-phase sont agencés sur le même rayon du stator.

Selon un mode de réalisation chaque point d'accès du courant électrique de ladite demi-phase est décalé d'un angle donné par rapport à l'extrémité associée.

Selon un mode de réalisation les points d'accès du courant électrique d'une demi-phase sont décalés radialement par rapport aux extrémités.

Selon un mode de réalisation les paires de couches de conducteurs du stator sont empilées les unes sur les autres après une rotation de 0 ou $\dfrac{2\pi}{p}$ radians et connectées entre elles par les points d'accès du courant électrique aux demi-phases ainsi mis en regard.

Selon un mode de réalisation les pistes conductrices constituant les phases sont assemblées en étoile, et les points de retour sont utilisés pour l'injection du courant électrique dans le stator.

Dans ce qui suit, les modes de réalisations de l'invention sont décrits en se référant aux figures ci-annexées d'une manière bien entendue non limitative dans lesquelles :

- la **figure 1** représente schématiquement un exemple d'utilisation d'un moteur électrique pour la propulsion d'un véhicule ;
- la **figure 2** représente schématiquement un autre exemple d'utilisation d'un moteur électrique pour la propulsion d'un véhicule dans lequel le moteur est intégré à la roue motrice ;

- la **figure 3** représente une coupe schématique d'un exemple d'un moteur à flux axial et à aimants permanents ;
- la **figure 4** montre une coupe schématique d'un circuit imprimé à deux couches ;
- la **figure 5** montre une coupe schématique d'un circuit imprimé à quatre couches ;
- la **figure 6** montre une coupe schématique de l'assemblage de deux circuits imprimés à deux couches ;
- la **figure 7** montre schématiquement la disposition des pôles magnétiques solidaires d'un rotor selon un mode de réalisation de l'invention ;
- la **figure 8** montre schématiquement un exemple de la disposition des pistes conductrices constituant une demi-phase d'un stator selon un mode de réalisation de l'invention ;
- la **figure 9** montre schématiquement un exemple de la disposition des pistes conductrices constituant les deux demi-phases d'une même phase d'un stator selon un mode de réalisation de l'invention ;
- la **figure 10** montre un schéma équivalent de la figure 9 ;
- la **figure 11a** montre schématiquement la disposition des points d'accès aux pistes conductrices constituant les demi-phases d'une même phase d'un stator selon un mode de réalisation de l'invention ;
- la **figure 11b** montre schématiquement les éléments de la figure 11a sur le schéma de la figure 9 ;
- la **figure 12** montre schématiquement la disposition points d'accès aux pistes conductrices constituant les demi-phases solidaires d'un stator selon un autre mode de réalisation de l'invention ;
- la **figure 13** montre un schéma équivalent des figures 11 et 12 ;
- la **figure 14** montre un schéma équivalent d'un assemblage de deux circuits en série selon un mode de réalisation de l'invention ;
- la **figure 15** montre un schéma équivalent d'un assemblage de deux circuits en parallèle selon un mode de réalisation de l'invention ; et
- la **figure 16** montre un schéma équivalent des 3 phases d'un stator connectées selon un mode de réalisation de l'invention.

Les modes de réalisation de l'invention sont décrits dans le contexte d'un moteur dont le champ magnétique d'excitation est généré par des aimants permanents, car ceux-ci présentent les meilleures performances. Cependant, l'homme du métier reconnaîtra que l'invention est applicable aux autres types d'excitation magnétique.

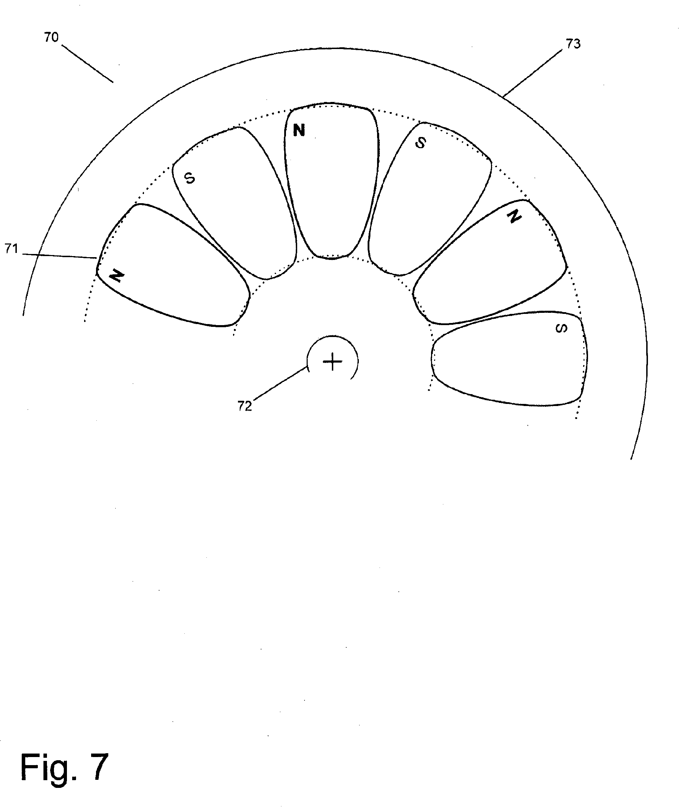

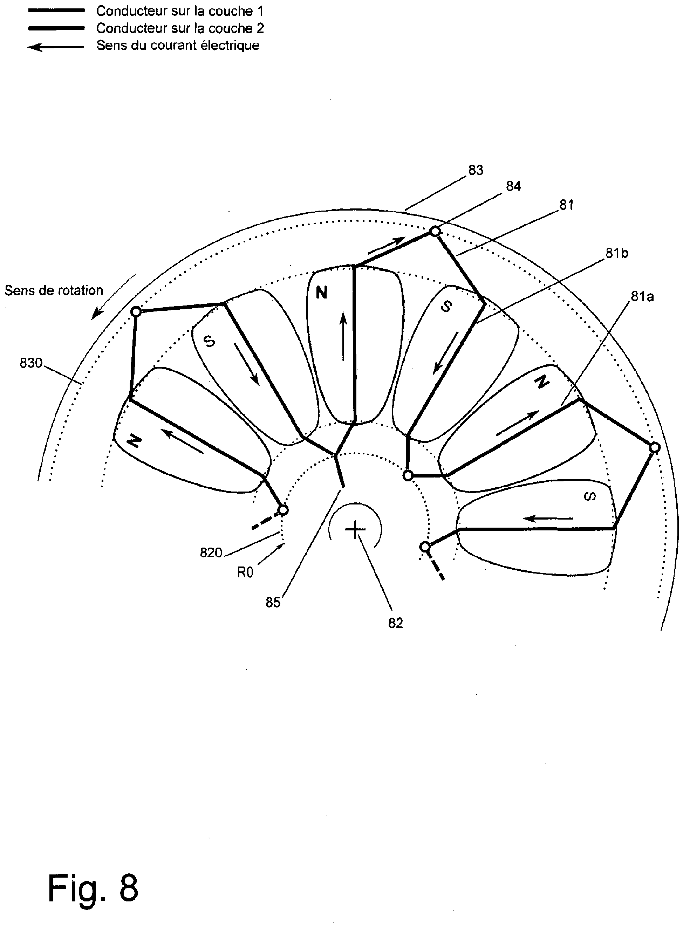

Afin de présenter des modes de réalisation de l'invention, la disposition des pôles d'un rotor et des enroulements d'un stator d'un moteur électrique pour une phase d'un stator seront décrits en référence aux figures 7 et 8. Dans le premier mode de réalisation décrit, le circuit électrique du moteur est constitué de deux couches conductrices. Ces deux couches conductrices peuvent être les deux couches d'un circuit imprimé double couche ou deux des couches d'un circuit imprimé multicouches connectées par des trous métallisés borgnes.

La figure 7 montre schématiquement la disposition des pôles magnétiques 71 solidaires d'un rotor 70 du moteur électrique à flux axial selon un exemple d'au moins un mode de réalisation de l'invention. La direction principale de magnétisation dans ce mode de réalisation est axiale. Les pôles magnétiques 71 sont disposés dans une configuration radiale entre le bord intérieur 72 au centre du rotor 70 et le bord extérieur 73 du rotor 70. Le bord intérieur 72 permet le passage de l'axe du stator.

La figure 8 montre schématiquement un exemple de la disposition des pistes conductrices constituant des demi-phases d'un phase d'un stator selon un mode de réalisation de l'invention. Chaque demi-phase d'une phase du stator est composée de pistes conductrices 81 effectuant des aller-retours entre le centre du stator 82 et l'extérieur 83 du stator. Deux ensembles de pistes conductrices 81 composant une demi-phase donnée sont gravées sur deux couches conductrices différentes. L'ensemble de pistes conductrices 81a d'une demi-phase effectuant un aller du courant électrique du centre 82 du stator vers l'extérieur 83 du stator est gravé sur une couche et l'autre ensemble de pistes conductrices 81b de la même demi-phase effectuant le retour du courant électrique de l'extérieur 83 du stator vers le centre 82 du stator est gravé sur une couche différente. Les pistes conductrices 81a et 81b sont interconnectées à l'aide de trous métallisés 84 disposés en périphérie 830 et à l'intérieur 820 du stator 80 sur un rayon du centre du stator noté R0. Les trous métallisés 84 constituent les connexions intrinsèques de la demi-phase. Cette configuration permet de disposer plusieurs phases sur la même paire de couches sans provoquer un court-circuit entre elles.

La forme géométrique des pistes conductrices 81 effectuant les aller et retours peut varier. US 3144574 propose notamment plusieurs géométries qui peuvent être utilisées dans le contexte de l'invention.

L'accès du courant électrique à la demi-phase s'effectue par ses extrémités au point 85 sur le bord intérieur du stator comme indiqué sur la figure 8 sur les deux couches conductrices.

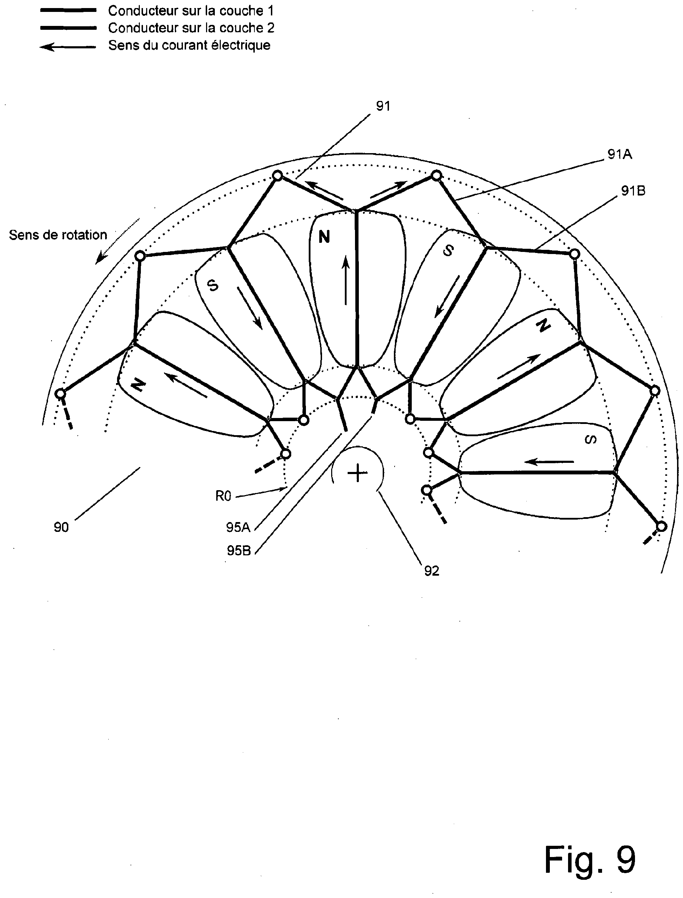

Une demi-phase 81 n'utilise que la moitié de la surface de conducteur disponible sur chaque couche. Il est possible de disposer une seconde demi-phase obtenue à partir de la première à l'aide d'une rotation d'un angle de $\dfrac{\pi}{p}$ p étant le nombre de pôles) comme illustré sur la figure 9. Les pistes conductrices de deux demi-phases d'une d'une même phase sont séparées par un angle de $\dfrac{\pi}{p}$. Les phases n et n+1 sont séparées par un angle de $\dfrac{\pi}{m\,p}$. Par conséquent toutes les demi-phases sont identiques entre elles à un angle de rotation près.

Chaque phase du stator est donc composée de deux demi-phases constitués par les pistes conductrices 91 (91A et 91B). Les terminaisons pour chaque phase sont disponibles au centre du circuit entre R0 et le bord intérieur 92 du stator.

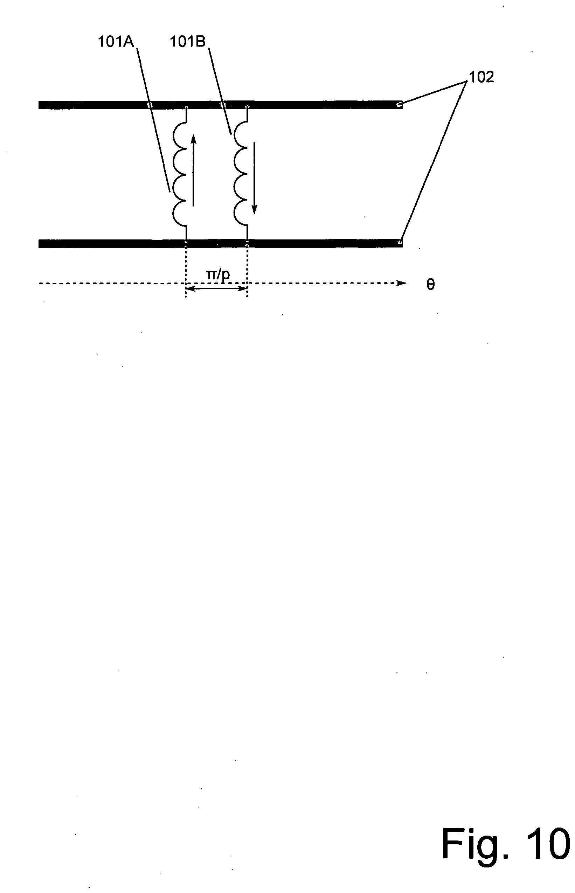

La figure 10 montre le schéma équivalent du circuit de la figure 9. Chaque demi-phase est représentée par une inductance 101A, 101B. La flèche sous l'inductance indique le sens du courant donnant un couple positif. Sur ce schéma de la figure 10, nous voyons que les deux demi-phases 101A, 101B sont de polarité opposée.

Seul l'angle $\theta = \dfrac{\pi}{p}$ des points d'accès 95A et 95B aux deux demi-phases d'une phase du stator est représenté sur le schéma. Le rayon peut varier de R0 jusqu'au bord intérieur 92 du stator.

En utilisant un trou métallisé pour chaque point d'accès du courant électrique 95 d'une demi-phase, on peut assembler deux circuits en parallèle. Un inconvénient de cet assemblage est que plus le nombre de couches est important, plus la résistance équivalente de l'assemblage est faible. Ceci implique des courants d'alimentation importants, ce qui peut être rédhibitoire selon les caractéristiques souhaitées du moteur ainsi que de l'électronique de puissance.

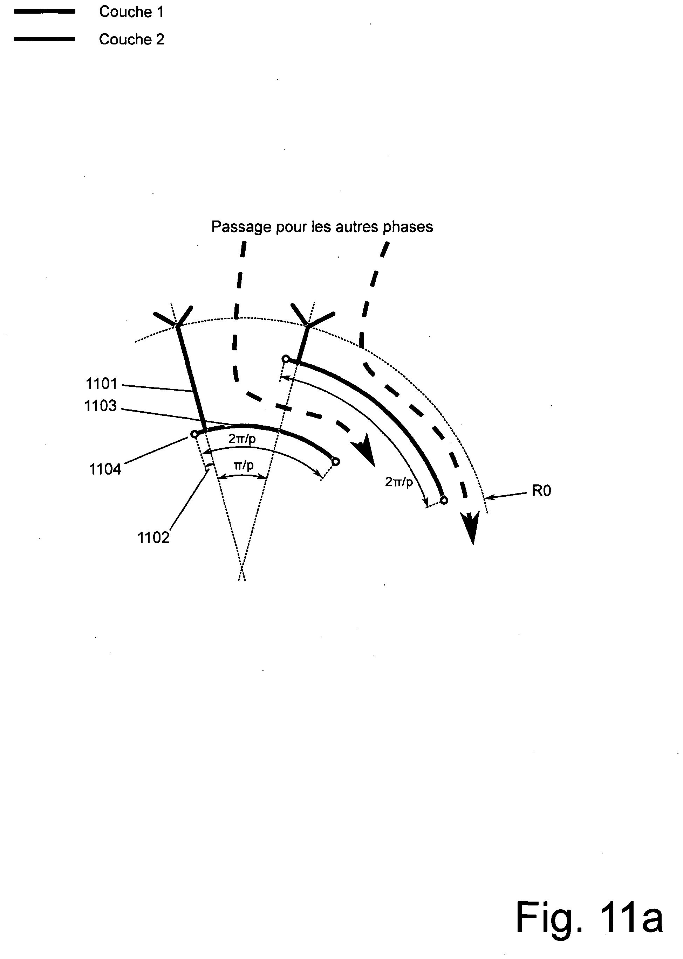

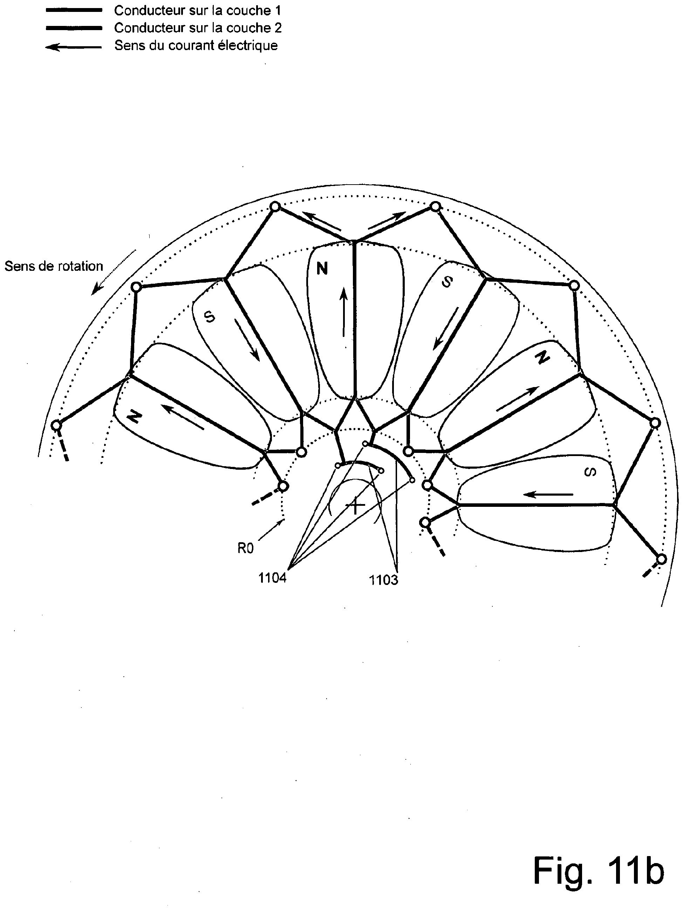

Afin de pouvoir assembler deux circuits électriques identiques en série, un mode de réalisation particulier de l'invention consiste à disposer les trous métallisés d'accès du courant électrique aux pistes conductrices 1101 des demi-phases comme illustré à les figures 11a et 11b. Les trous métallisés d'accès du courant électrique 1104 aux demi-phases 1101 dans ce mode de réalisation sont disposés sur le même rayon du centre du stator et décalés de $\dfrac{2\pi}{p}$ radians l'un par rapport à l'autre. Ils sont décalés tangentiellement d'un angle 1102 par rapport aux extrémités des demi-phases pour éviter au trou métallisé d'accès 1104 de la demi-phase 1101 d'être en court-circuit avec l'autre extrémité 1103 de la même demi-phase connectée à l'autre point d'accès du courant électrique 1104. On remarque qu'il est possible d'obtenir les autres phases du stator par rotation de la phase représentée sans court-circuit entre les phases en adaptant le rayon des points d'accès aux demi-phases pour chaque demi-phase.

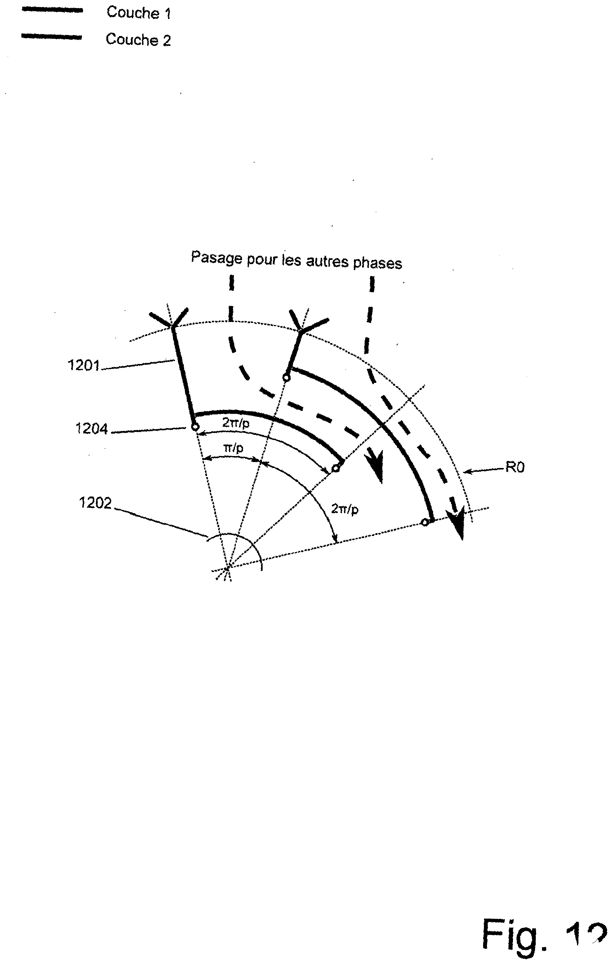

La figure 12 illustre schématiquement un autre mode de réalisation de l'invention dans lequel les trous métallisés 1204 des accès du courant électrique aux pistes conductrices des demi-phases constituant une phase sont décalés dans la direction radiale au lieu de la direction tangentielle. Selon l'espace entre R0 et le bord intérieur 1202 du stator, la largeur des pistes conductrices 1201, et la largeur des pistes conductrices d'interconnexion, l'un ou l'autre des deux modes de réalisation sera mieux adapté. Bien entendu il est aussi possible de déplacer les trous métallisés 1204 dans une direction, combinaison de la direction tangentielle et radiale.

Dans le cas où des paires de couches conductrices devraient être empilées au sein d'un même circuit imprimé multi-couches, les trous métallisés en périphérie et sur R0 constituant les interconnexions intrinsèques des demi-phases seraient des trous borgnes. Seuls les trous métallisés d'accès aux demi-phases seraient traversants.

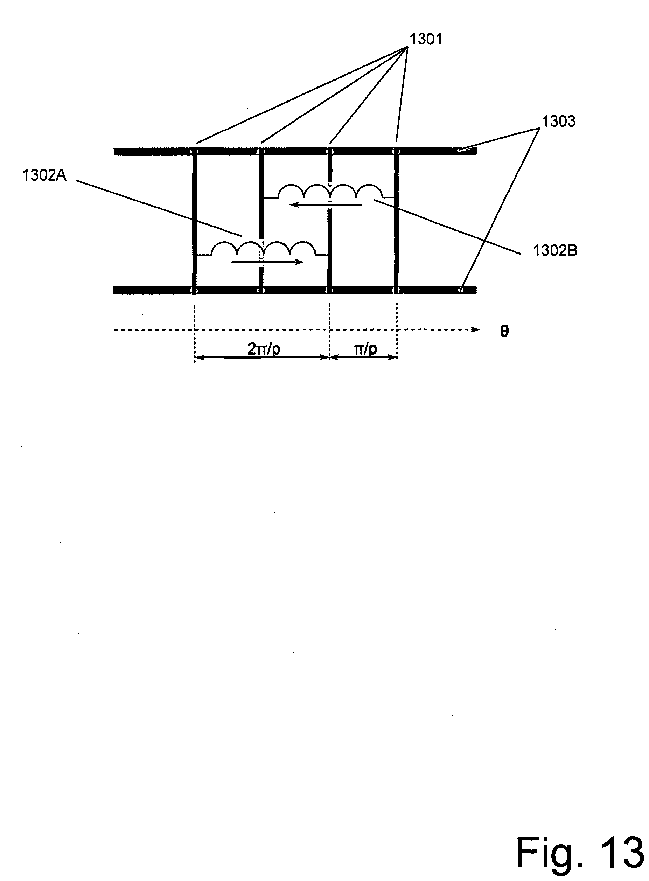

La figure 13 montre un schéma équivalent des circuits représentés sur les figures 11 et 12. Les demi-phases 1302A et 1302B sont représentées entre les deux couches de conducteur 1303, ainsi que les trous métallisés d'accès aux demi-phases 1301. Seul l'angle θ de la position des trous métallisés 1301 est représenté.

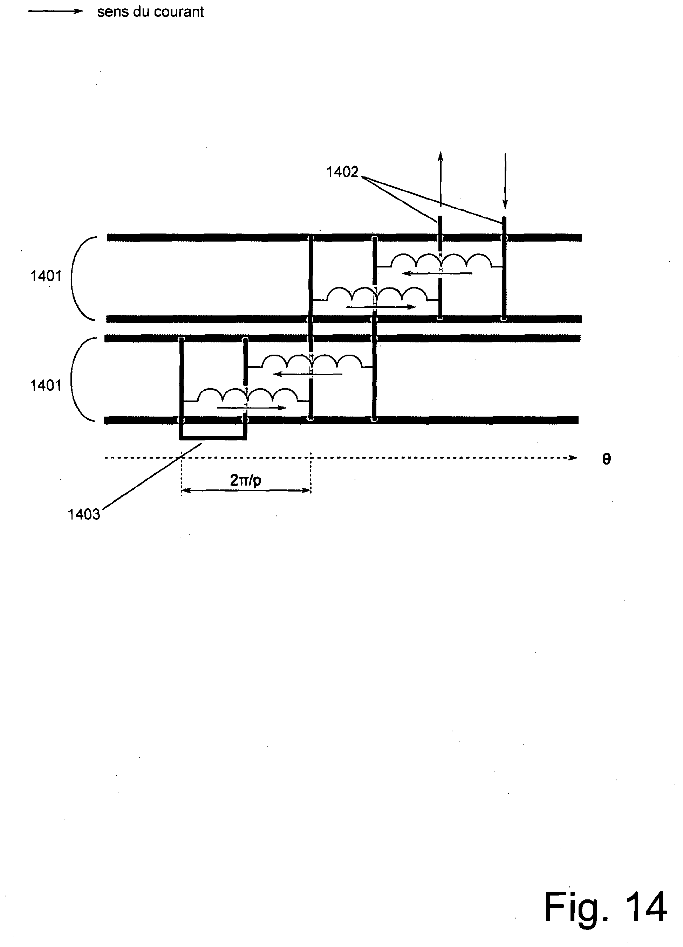

La figure 14 montre le schéma équivalent d'un assemblage de deux circuits 1401 décrits dans la figure 13 en série. Ce schéma peut représenter l'assemblage de deux circuits double couche ou quatre des couches d'un circuit multi-couche. Une rotation d'un angle de $\dfrac{2\pi}{p}$ radians d'un circuit par rapport à l'autre permet de mettre en regard les trous métallisés des accès du courant électrique des demi-phases de manière à ce que celles-ci soient connectées en série, et que le sens du courant électrique circulant dans chaque demi-phase permette aux couples générés par chaque demi-phase de s'ajouter, les dispositions des pistes des demi-phases , et des pôles du stator étant invariantes par rotation de $\dfrac{2\pi}{p}$ radians. Les trous métallisés 1402 permettent au courant d'entrer et de sortir de l'ensemble des demi-phases des deux circuits 1401 qui constituent une phase complète du stator. Les trous métallisés 1402 sont ainsi appelés les points d'accès de la phase représentée. Le point de retour 1403 permet de connecter les demi-phases entre elles et, ainsi, de fermer la boucle de courant.

Dans le cas d'un assemblage de deux circuits imprimés, cette disposition permet donc un assemblage en série de circuits identiques. Les frais d'outillage pour la fabrication et de logistique sont ainsi limités.

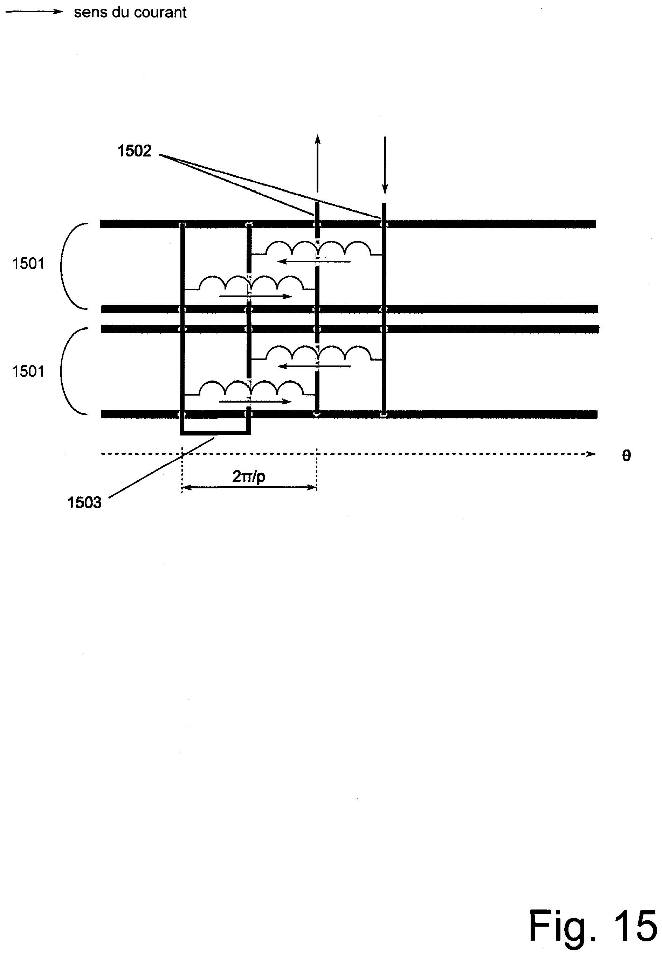

La figure 15 montre la connexion en parallèle de deux circuits 1501 tels que décrits dans la figure 13 selon un mode de réalisation de l'invention. Les circuits 1501 n'ont subi aucune rotation l'un par rapport à l'autre, et l'ensemble des points d'accès aux demi-phases d'un des circuits 1501 est connecté à son équivalent de l'autre circuit 1501. De même que dans la figure 14, les points 1502 sont les points d'accès à la phase représentée, et le point de retour 1503 permet de connecter les demi-phases entre elles et, ainsi, de fermer la boucle de courant.

Lorsqu'un nouveau circuit est ajouté à l'empilement il peut l'être en série ou en parallèle suivant qu'une rotation de $\dfrac{2\pi}{p}$ par rapport au circuit précédent est effectuée ou non. Dans le cas d'un assemblage de circuits imprimés, il est ainsi possible d'obtenir différentes configurations électriques avec un seul type de circuit imprimé.

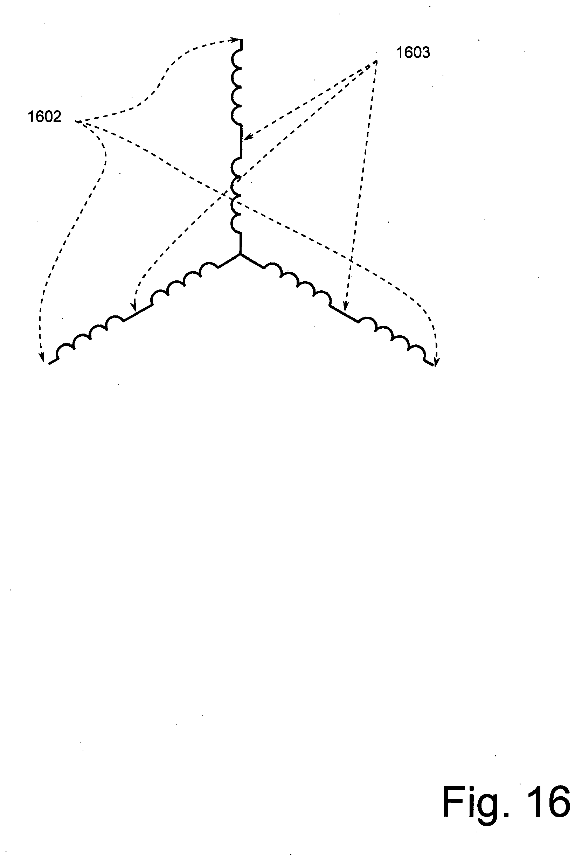

La figure 16 montre un schéma équivalent des 3 phases d'un stator assemblées selon un mode de réalisation de l'invention décrit, puis en étoile. Le point de retour 1603 signalé sur les figures 14 et 15 est indiqué sur ce schéma pour chacune des phases. Les points de retour 1603 sont accessibles au centre du stator sur la face opposée à la face sur laquelle les points d'accès aux phases 1602 sont accessibles. Pour chaque phase, sur les deux points d'accès représentés sur la figure 14 (1402) et 15 (1502), un seul reste disponible l'autre étant utilisé pour la connexion des phases entre elles en étoile.

Si le courant est injecté aux points de retour au lieu des points d'accès aux phases, et que ceux-ci sont laissés en circuit ouvert, alors seule la moitié des enroulements est utilisée. Dans ce cas, la force contre-électromotrice pour une vitesse de rotation donnée, est divisée par deux. Ce dispositif permet donc d'implémenter un système à deux vitesses à double enroulement. Lorsque la vitesse de rotation est faible, le courant est injecté aux points d'accès aux phases. Dans ce cas le couple par ampère de courant injecté sera le plus grand. Lorsque la vitesse de rotation est importante, le courant est injecté aux points de retour, les points d'accès aux phases étant laissés en circuit ouvert. Dans ce cas, la force contre-électromotrice est divisée par deux.

Dans la description proposée, chaque demi-phase ne traverse qu'une seule fois un pôle pour simplifier la description. En réalité, chaque demi-phase peut effectuer plusieurs tours du stator au lieu d'un seul comme décrit. Cette autre configuration ne changeant pas les dispositions des points d'accès aux demi-phases, elle n'a pas d'influence sur l'objet de l'invention.

## Revendications

1. Un moteur électrique à flux axial à 2p pôles magnétiques comportant :

   un rotor ; et
   un stator à m phases composé d'au moins une paire de couches de conducteurs sur lesquelles des pistes conductrices constituant les phases du stator sont agencées **caractérisé en ce que** les pistes conductrices sont agencées en demi-phases, les pistes conductrices comprenant des points d'accès (85, 95A, 95B, 1104, 1204, 1402, 1502) d'un courant électrique aux demi-phases sur le bord intérieur du stator,
   les points d'accès (85, 95A, 95B, 1104, 1204, 1402, 1502) permettant à un courant électrique d'entrer et de sortir de chaque phase du stator, et des points de retour (84, 1403, 1503) permettent de connecter les demi-phases entre elles.

2. Un moteur électrique selon la revendication 1 dans lequel chaque demi-phase comprend deux ensembles de pistes conductrices ; chaque ensemble de pistes conductrices étant disposé dans une configuration radiale entre un bord intérieur du stator et un bord extérieur du stator, de façon que le courant électrique d'un ensemble de pistes conductrices d'une demi-phase court du bord intérieur du stator vers le bord extérieur du stator et le courant électrique de l'autre ensemble de pistes conductrices de ladite demi-phase court du bord extérieur du stator vers le bord intérieur du stator.

3. Un moteur électrique selon la revendication 2 dans lequel un des ensembles des pistes conductrices d'une demi-phase est imprimé sur une couche d'une paire de couches de conducteurs et l'autre ensemble de pistes conductrices de ladite demi-phase est imprimé sur l'autre couche de ladite paire de couches de conducteurs.

4. Un moteur électrique selon la revendication 3 dans lequel les deux ensembles de pistes conductrices d'une demi-phase sont interconnectés par des connexions disposées à proximité des bords intérieur et extérieur du stator.

**5.** Un moteur électrique selon l'une quelconque des revendications précédentes dans lequel les deux demi-phases d'une même phase et d'une même paire de couches de conducteurs du stator sont décalées l'une par rapport à l'autre par une rotation d'angle

$$\frac{\pi}{p}\text{radians}$$

**6.** Un moteur électrique selon l'une quelconque des revendications précédentes dans lequel deux points d'accès du courant électrique aux pistes conductrices d'une demi-phase d'une paire de couches de conducteurs du stator, sont décalés l'un par rapport à l'autre par une rotation d'angle $\frac{2\pi}{p}$ radians, chaque point d'accès du courant électrique étant associé à une extrémité de ladite demi-phase.

**7.** Un moteur électrique selon la revendication 6 dans lequel les points d'accès du courant électrique d'une demi-phase sont agencés sur le même rayon du stator.

**8.** Un moteur électrique selon la revendication 6 ou 7 dans lequel chaque point d'accès du courant électrique de ladite demi-phase est décalé d'un angle donné par rapport à l'extrémité associée.

**9.** Un moteur électrique selon l'une quelconque des revendications 6 à 8 dans lequel les points d'accès du courant électrique d'une demi-phase sont décalés radialement par rapport aux extrémités.

**10.** Un moteur électrique selon l'une quelconque des revendications 5 à 9 dans lequel les paires de couches de conducteurs du stator sont empilées les unes sur les autres après une rotation de 0 ou $\frac{2\pi}{p}$ radians et connectées entre elles par les points d'accès du courant électrique aux demi-phases ainsi mis en regard.

**11.** Un moteur électrique selon l'une quelconque des revendications 5 à 10 dans lequel les pistes conductrices constituant les phases sont assemblées en étoile, et les points de retour sont utilisés pour l'injection du courant électrique dans le stator.

**Patentansprüche**

**1.** Axialfluss-Elektromotor mit 2p-Magnetpolen, aufweisend:

einen Rotor; und
einen Stator mit m Phasen, der aus mindestens einem Paar Leiterschichten zusammengesetzt ist, auf denen Leiterbahnen, die die Phasen des Stators bilden, eingerichtet sind, **dadurch gekennzeichnet, dass** die Leiterbahnen als Halbphasen eingerichtet sind, wobei die Leiterbahnen Zugangspunkte (85, 95A, 95B, 1104, 1204, 1402, 1502) eines elektrischen Stroms zu den Halbphasen auf dem Innenrand des Stators umfassen,
wobei die Zugangspunkte (85, 95A, 95B, 1104, 1204, 1402, 1502) einem elektrischen Strom erlauben, in jede Phase des Stators einzutreten und daraus auszutreten, und
Rückkehrpunkte (84, 1403, 1503) erlauben, die Halbphasen miteinander zu verbinden.

**2.** Elektromotor nach Anspruch 1, wobei jede Halbphase zwei Leiterbahneneinheiten umfasst; wobei jede Leiterbahneneinheit in einer radialen Konfiguration zwischen einem Innenrand des Stators und einem Außenrand des Stators derart angeordnet ist, dass der elektrische Strom einer Leiterbahneneinheit einer Halbphase vom Innenrand des Stators zum Außenrand des Stators läuft und der elektrische Strom der anderen Leiterbahneneinheit der Halbphase vom Außenrand des Stators zum Innenrand des Stators läuft.

**3.** Elektromotor nach Anspruch 2, wobei eine der Leiterbahneneinheiten einer Halbphase auf eine Schicht eines Leiterschichtenpaars gedruckt ist und die andere Leiterbahneneinheit der Halbphase auf die andere Schicht des Leiterschichtenpaars gedruckt ist.

**4.** Elektromotor nach Anspruch 3, wobei die zwei Leiterbahneneinheiten einer Halbphase durch Verbindungen miteinander verbunden sind, die in der Nähe des Innen- und Außenrands des Stators angeordnet sind.

**5.** Elektromotor nach einem der vorangehenden Ansprüche, wobei die zwei Halbphasen derselben Phase und desselben Leiterschichtenpaars des Stators durch eine Winkelrotation von $\frac{\pi}{p}$ rad zueinander versetzt sind.

**6.** Elektromotor nach einem der vorangehenden Ansprüche, wobei zwei Zugangspunkte des elektrischen Stroms zu den Leiterbahnen einer Halbphase eines Leiterschichtenpaars des Stators durch eine Winkelrotation von $\frac{2\pi}{p}$ rad zueinander versetzt sind, wobei jeder Zugangspunkt des elektrischen Stroms einem Ende der Halbphase zugeordnet ist.

**7.** Elektromotor nach Anspruch 6, wobei die Zugangspunkte des elektrischen Stroms einer Halbphase auf demselben Radius des Stators eingerichtet sind.

**8.** Elektromotor nach Anspruch 6 oder 7, wobei jeder Zugangspunkt des elektrischen Stroms der Halbphase in einem bestimmten Winkel in Bezug auf das zugeordnete Ende versetzt ist.

**9.** Elektromotor nach einem der Ansprüche 6 bis 8, wobei die Zugangspunkte des elektrischen Stroms einer Halbphase in Bezug auf die Enden radial versetzt sind.

**10.** Elektromotor nach einem der Ansprüche 5 bis 9, wobei die Leiterschichtenpaare des Stators nach einer Rotation von 0 oder $\dfrac{2\pi}{p}$ rad übereinandergestapelt und durch Zugangspunkte des elektrischen Stroms zu den somit zueinander zugewandten Halbphasen miteinander verbunden sind.

**11.** Elektromotor nach einem der Ansprüche 5 bis 10, wobei die die Phasen bildenden Leiterbahnen sternförmig verbunden sind und die Rückkehrpunkte für das Einleiten des elektrischen Stroms in den Stator verwendet werden.

## Claims

**1.** A 2p magnetic pole axial-flux electric motor including:

> a rotor; and
> an m-phase stator composed of at least one pair of layers of conductors on which conductor tracks constituting the phases of the stator are arranged, **characterized in that** the conductor tracks are arranged in half-phases,
> the conductor tracks comprising access points (85, 95A, 95B, 1104, 1204, 1402, 1502) of an electric current to the half-phases on the inner edge of the stator,
> the access points (85, 95A, 95B, 1104, 1204, 1402, 1502) allowing an electric current to enter and exit each phase of the stator, and
> return points (84, 1403, 1503) allow connecting the half-phases together.

**2.** The electric motor according to claim 1 wherein each half-phase comprises two sets of conductor tracks; each set of conductor tracks being disposed in a radial configuration between an inner edge of the stator and an outer edge of the stator, such that the electric current of one set of conductor tracks of a half-phase flows from the inner edge of the stator to the outer edge of the stator and the electric current of the other set of conductor tracks of said half-phase flows from the outer edge of the stator to the inner edge of stator.

**3.** The electric motor according to claim 2 wherein one of the sets of the conductor tracks of a half-phase is printed on one layer of a pair of layers of conductors and the other set of conductor tracks of said half-phase is printed on the other layer of said pair of layers of conductors.

**4.** The electric motor according to claim 3 wherein the two sets of conductor tracks of a half-phase are interconnected by connections arranged in the vicinity of the inner and outer edges of the stator.

**5.** The electric motor according to any one of the preceding claims wherein the two half-phases of the same phase and of the same pair of layers of conductors of the stator are offset relative to each other by an angle rotation of $\dfrac{\pi}{p}$ radians.

**6.** The electric motor according to any one of the preceding claims wherein two access points of the electric current to the conductor tracks of a half-phase of a pair of layers of conductors of the stator, are offset relative to each other by an angle rotation of $\dfrac{2\pi}{p}$ radians, each access p point of the electric current being associated with one end of said half-phase.

**7.** The electric motor according to claim 6 wherein the access points of the electric current of a half-phase are arranged on the same radius of the stator.

**8.** The electric motor according to claim 6 or 7 wherein each access point of the electric current of said half-phase is offset by a given angle relative to the associated end.

**9.** The electric motor according to any one of claims 6 to 8 wherein the access points of the electric current of a half-phase are offset radially relative to the ends.

**10.** The electric motor according to any one of claims 5 to 9 wherein the pairs of layers of conductors of the stator are stacked on top of each other after a rotation of 0 or $\dfrac{2\pi}{p}$ radians and connected together through the access points of the electric current to the half-phases thus placed opposite each other.

**11.** The electric motor according to any one of claims 5 to 10 wherein the conductor tracks constituting the phases are assembled in a star, and the return points are used for the injection of the electric current in the stator.

Puissance électrique

Puissance mécanique

Signal

Fig. 1

Puissance électrique

Signal

# Fig. 2

Fig. 3

Fig. 4

Fig. 5

Fig. 6

Fig. 7

Conducteur sur la couche 1
Conducteur sur la couche 2
Sens du courant électrique

83
84
81
81b
81a

Sens de rotation

830

N

S

N

S

N

S

820
R0

85

82

# Fig. 8

Conducteur sur la couche 1
Conducteur sur la couche 2
Sens du courant électrique

91

91A

91B

Sens de rotation

N

S

S

N

N

S

90

R0

95A

95B

92

# Fig. 9

Fig. 10

———— Couche 1

———— Couche 2

Passage pour les autres phases

1101

1103

1104

1102

2π/p

π/p

2π/p

R0

# Fig. 11a

——————— Conducteur sur la couche 1
——————— Conducteur sur la couche 2
◄——————— Sens du courant électrique

Fig. 11b

———— Couche 1

———— Couche 2

Pasage pour les autres phases

1201

1204

$2\pi/p$

$\pi/p$

1202

$2\pi/p$

R0

Fig. 12

Fig. 13

sens du courant

1402

1401

1401

1403

2π/p

θ

Fig. 14

sens du courant

Fig. 15

Fig. 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 405858 A, N. Tesla
- US 1889 A
- WO 2004073365 A
- US 3144574 A